(19) Europäisches Patentamt
European Patent Office
Office européen des brevets

(11) **EP 3 502 630 A1**

(12) **EUROPÄISCHE PATENTANMELDUNG**

(43) Veröffentlichungstag:
26.06.2019  Patentblatt 2019/26

(51) Int Cl.:
*G01D 11/24* *(2006.01)*

(21) Anmeldenummer: **18208052.3**

(22) Anmeldetag: **23.11.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **19.12.2017  DE 102017130487**

(71) Anmelder: **Krohne Messtechnik GmbH**
**47058 Duisburg (DE)**

(72) Erfinder: **Boenneken, Christoph**
**46539 Dinslaken (DE)**

(74) Vertreter: **Gesthuysen Patent- und Rechtsanwälte**
**Huyssenallee 100**
**45128 Essen (DE)**

(54) **SENSOR DER PROZESSMESSTECHNIK UND VERFAHREN ZUR HERSTELLUNG EINES SOLCHEN SENSORS**

(57)     Die Erfindung betrifft einen Sensor (1) der Prozessmesstechnik zur Erfassung einer Messgröße, mit mindestens einem als Sensorelement (2) dienenden elektrischen oder elektronischen Bauteil, wobei das Sensorelement (2) zumindest teilweise von einem Verguss (4) umgeben ist, wobei der Verguss (4) das Sensorgehäuse (5) bildet und durch Vergießen von Vergussmasse in eine Gussform (6) hergestellt ist, wobei die Außenabmessungen des Sensorgehäuses (5) den Innenabmessungen der Gussform (6) entsprechen.

Die der Erfindung zugrunde liegende Aufgabe, einen Sensor (1) anzugeben, der gegenüber dem Stand der Technik vorteilhaft ausgebildet ist, nämlich auf einfache Art an Anforderungen verschiedener Einsatzgebiete angepasst werden kann, wird dadurch gelöst, dass das Sensorgehäuse (5) Bereiche (7, 8) mit sich voneinander unterscheidenden physikalischen Eigenschaften aufweist, wobei die sich voneinander unterscheidenden physikalischen Eigenschaften durch verschiedene Vergussmassen bewirkt sind.

Ferner betrifft die Erfindung ein Verfahren zum Herstellen eines entsprechenden Sensors (1).

Fig. 1

EP 3 502 630 A1

**Beschreibung**

Die Erfindung betrifft einen Sensor der Prozessmesstechnik zur Erfassung einer Messgröße, mit mindestens einem als Sensorelement dienenden elektrischen oder elektronischen Bauteil, wobei das Sensorelement zumindest teilweise von einem Verguss umgeben ist, wobei der Verguss das Sensorgehäuse bildet und durch Vergießen von Vergussmasse in eine Gussform hergestellt ist, wobei die Außenabmessungen des Sensorgehäuses den Innenabmessungen der Gussform entsprechen. Des Weiteren betrifft die Erfindung ein Verfahren zum Herstellen eines solchen Sensors.

Die in Rede stehenden Sensoren sind in einer Vielzahl aus dem Stand der Technik bekannt. Diese Sensoren weisen ein Sensorelement, das zur eigentlichen Messwertaufnahme dient, und ein Sensorgehäuse auf. Das Sensorgehäuse umschließt den Messwertaufnehmer und dient zum Schutz desselben. Dem Sensorgehäuse kommt in der Prozessmesstechnik eine wichtige Rolle zu, da Sensoren in der der Prozessmesstechnik im Feld in unmittelbarer Kontakt zu einem industriellen Prozesses eingesetzt werden, entsprechend rau können die Einsatzbedingungen sein. Sensoren der Prozessmesstechnik erfassen beispielsweise den Füllstand, den Durchfluss, die Temperatur, die elektrische Leitfähigkeit oder den pH-Wert eines Prozessmediums.

Je nach Einsatzgebiet des Sensors werden unterschiedliche Anforderungen an das Gehäuse gestellt. Die Anforderungen können hierbei insbesondere mechanischer, chemischer, aber auch thermischer Natur sein. Aus dem Stand der Technik bekannt, und der vorliegenden Erfindung zugrunde liegend, ist ein Sensor, der ein gegossenes Gehäuse aufweist. Bei einem im Stand der Technik verbreiteteren Sensorkonzept ist das Sensorelement (und gegebenenfalls weitere elektrische oder elektronische Bauteile) meist von einem starren Gehäuse umgeben und in diesem starren Gehäuse vergossen, wobei das starre Gehäuse als äußere Hülle des Sensors, also als das Gehäuse an sich, verbleibt. Bei den gattungsgemäßen Sensoren hingegen entfällt die äußere starre Hülle, also die Gussform, nach dem Vergießen, so dass der Verguss - neben den sonstigen Funktionen wie beispielsweise der elektrischen Isolation und der mechanischen Fixierung von Bauteilen zueinander - gleichzeitig auch als Gehäuse fungiert.

Bekannt ist, gattungsgemäße Sensoren so herzustellen, dass die elektrischen und elektronischen Komponenten des Sensors mit einem Vergussmaterial - in der Regel einem Kunstharz - vergossen werden, wobei das Vergussmaterial in eine Gussform eingebracht wird, die nach dem Aushärten entfernt wird. Die elektronischen Komponenten sind dabei entweder vollständig oder zumindest teilweise vom Vergussmaterial umschlossen. Wenn es heißt, dass die Außenabmessungen des gegossenen Sensorgehäuses den Innenabmessungen der Gussform entsprechen, dann ist hiermit gemeint, dass die Außenabmessungen des gegossenen Sensorgehäuses im Wesentlichen den Innenabmessungen der Gussform entsprechen. Umfasst ist also auch, dass das Sensorgehäuse nach dem Entfernen aus der Gussform beispielsweise mit einer Beschichtung versehen wird oder die Oberfläche des Sensors beispielsweise durch Schleifen nachbearbeitet wird.

Nachteilig an den aus dem Stand der Technik bekannten gattungsgemäßen Sensoren ist, dass diese nicht an verschiedene Einsatzgebiete angepasst werden können.

Der Erfindung liegt demnach die Aufgabe zugrunde, einen Sensor anzugeben, der gegenüber dem Stand der Technik vorteilhaft ausgebildet ist, nämlich auf einfache Art an Anforderungen verschiedener Einsatzgebiete angepasst werden kann.

Die Aufgabe ist zunächst und im Wesentlichen dadurch gelöst, nämlich mit den Merkmalen des Patentanspruchs 1, dass das Sensorgehäuse Bereiche mit sich voneinander unterscheidenden physikalischen Eigenschaften aufweist. Die sich voneinander unterscheidenden physikalischen Eigenschaften sind hierbei durch verschiedene Vergussmassen bewirkt, die verschiedene physikalische Eigenschaften aufweisen. Dadurch, dass das Sensorgehäuse aus mehreren Vergussmassen hergestellt ist, werden die verschiedenen Bereiche realisiert. So wird auf einfache Art und Weise ein Sensor bereitgestellt, der an die an ihn gestellten Anforderungen angepasst ist. Je nachdem, wo der Sensor zum Einsatz kommen soll, können Vergussmassen verwendet werden, die physikalische Eigenschaften aufweisen, die vorteilhaft für die jeweilige Anwendung sind.

Wenn von verschiedenen Vergussmassen die Rede ist, dann können diese verschiedenen Vergussmassen auf unterschiedliche Weise realisiert sein. In einer bevorzugten Ausgestaltung werden verschiedene Vergussmassen dadurch realisiert, dass einer Ausgangs-Vergussmasse unterschiedliche Zusatzstoffe beigemischt werden. Durch die Art und die Menge des beigemischten Zusatzstoffes werden die physikalischen Eigenschaften der Ausgangs-Vergussmasse entsprechend beeinflusst und verändert. Als Ausgangs-Vergussmasse eignet sich beispielsweise Epoxidharz, insbesondere 2-Komponenten-Epoxidharz. Als Zusatzstoffe eignen sich beispielsweise faserförmige oder pulverförmige Zusatzstoffe wie Baumwollflocken, Metallpulver oder Kreide. Ebenfalls geeignet sind kugelförmige Füllstoffe, beispielsweise Glashohlkugeln oder Kunststoffhohlkugeln. In einer weiteren Ausgestaltung werden verschiedene Ausgangs-Vergussmassen verwendet. Die Erfindung ist jedoch nicht beschränkt auf die genannten Vergussmassen und Zusatzstoffe.

Der Verguss umgibt das Sensorelement zumindest teilweise. Je nach Sensorart gibt es verschiedene Ausgestaltungen. Ist der Sensor beispielsweise als pH-Sensor ausgebildet, so ragt der Sensorkopf aus dem Verguss heraus. Ist der Sensor beispielsweise als induktiver Leitfähigkeitssensor ausgebildet, so sind die als Sensorelement dienenden Spulen des induktiven Leitfähigkeitssensors bevorzugt vollständig mit Verguss umgeben.

Viele Sensoren weisen neben dem Sensorelement auch eine Sensorelektronik auf, die direkt in dem Sensorgehäuse integriert ist. Die Sensorelektronik umfasst dabei einen Träger und elektronische und elektrische Bauteile, die auf den Träger aufgebracht sind. Der Träger kann hierbei beispielsweise eine Leiterplatte oder ein flexibles Leiterband sein. Die Bauteile sind auf bekannte Weise auf den Träger aufgebracht. In einer Ausgestaltung, bei der der Sensor eine Sensorelektronik aufweist, ist der Träger also von dem Verguss ebenfalls umschlossen.

Eine bevorzugte Ausgestaltung des erfindungsgemäßen Sensors ist dadurch ausgezeichnet, dass der Verguss im Bereich des Trägers einen thermischen Ausdehnungskoeffizienten aufweist, der dem thermischen Ausdehnungskoeffizienten des Trägermaterials entspricht. Dadurch, dass der Träger mitsamt seiner Bauteile von dem Verguss umschlossen ist, könnten thermische Ausdehnungen der Vergussmasse dazu führen, dass die Bauteile von dem Träger abgeschert werden. Temperaturwechsel in den verschiedenen Materialien führen zu mechanischen Spannungen, die insbesondere aus Unterschieden in den thermischen Ausdehnungskoeffizienten und Elastizitätsmodulen von Träger, Bauteil und Verguss resultieren. Weisen der Verguss und das Trägermaterial einen einander entsprechenden thermischen Ausdehnungskoeffizienten auf, so verhalten sie sich bei einer Temperaturänderung auch entsprechend, es kommt also nicht zu relativen thermischen Bewegungen zueinander und damit nicht zu einem Abscheren der Bauteile von dem Träger.

Wenn es heißt, dass der thermische Ausdehnungskoeffizient des Vergusses dem thermischen Ausdehnungskoeffizienten des Trägers entspricht, dann ist damit nicht zwingend gemeint, dass die beiden thermischen Ausdehnungskoeffizienten identisch sein müssen. Vielmehr ist damit gemeint, dass der thermische Ausdehnungskoeffizient des Vergusses im Wesentlichen dem des Trägers entspricht, sodass es bei einer thermischen Ausdehnung nicht zu einer Abscherung kommt.

In einer weiteren Ausgestaltung sind der thermische Ausdehnungskoeffizient und das Elastizitätsmodul des Vergusses derart aufeinander und auf die Ausdehnungskoeffizienten und Elastizitätsmodule des Trägers und der Sensorelektronik abgestimmt, dass es bei einer Temperaturänderung nicht zu einem Abscheren der Sensorelektronik von dem Träger kommt. Die aus einer Temperaturänderung $\Delta T$ resultierende mechanische Spannung $\sigma$ lässt sich vereinfacht ausdrücken durch

$$\sigma = E_2 \left( \frac{1}{1-\mu} \right) (\alpha_2 - \alpha_1) \cdot \Delta T$$

wobei $\sigma$ die mechanische Spannung, $E$ das Elastizitätsmodul, $\mu$ die Poissonzahl, $\alpha$ der thermische Ausdehnungskoeffizient und $\Delta T$ die Temperaturänderung sind. Diese erfindungsgemäße Ausgestaltung hat den Vorteil, dass größere Unterschiede in den thermischen Ausdehnungskoeffizienten durch eine höhere Elastizität der Materialien ausgeglichen werden können. Bevorzugt werden Vergussmassen mit einem höheren thermischen Ausdehnungskoeffizienten und einem geringeren Elastizitätsmodul verwendet. Dies ist beispielsweise auch darin begründet, dass die Wärmetransportfähigkeit eines Materials meist stark von dem Elastizitätsmodul abhängt. Soll also eine hohe Wärmetransportfähigkeit eines Materials gegeben sein, resultiert das in einem weniger elastischen Material.

Eine weitere Ausgestaltung zeichnet sich dadurch aus, dass der Verguss im Bereich des Trägers einen hohen spezifischen elektrischen Widerstand aufweist. Der spezifische elektrische Widerstand des Vergussmaterials kann durch Beimischen von Glasfasern oder Glas erhöht werden.. Damit es nicht zu einer Beeinträchtigung der Funktion der Schaltung durch zu geringe elektrische Widerstandspfade in dem Verguss kommt, ist erfindungsgemäß vorgesehen, dass der spezifische elektrische Widerstand des Vergusses so groß ist, dass der Verguss bei der konkret realisierten Schaltung elektrische Widerstände zwischen Schaltungspunkten realisiert, die wenigstens ein bis zwei Zehnerpotenzen größer sind als die entsprechenden elektrischen Widerstände der Sensorelektronik selbst. Entsprechend groß ist der spezifische Oberflächenwiderstand des Vergusses zu wählen. Zu beachten ist hierbei jedoch, dass sich der spezifische elektrische Widerstand mit der Temperatur oder durch Verunreinigungen auf dem Träger ändert. Ebenfalls ist zu beachten, dass der spezifische elektrische Widerstand durch Feuchtigkeit beeinflusst wird.

Die in Rede stehenden Sensoren werden in der Regel in einen Prozessraum integriert, insbesondere durch einen Prozessanschluss an einem Prozessraum befestigt. Ein derartiger Prozessanschluss kann beispielsweise durch einen Flansch oder durch ein Gewinde realisiert sein. Wenn der Prozessraum ein Tank ist, wird der Sensor über den Prozessanschluss mit dem Tank befestigt, beispielsweise angeflanscht oder eingeschraubt. In einer Ausgestaltung ist vorgesehen, dass der Verguss im Bereich des Prozessanschlusses ebenfalls einen hohen spezifischen elektrischen Widerstand aufweist. Hierdurch kann garantiert werden, dass das Sensorgehäuse im Bereich des Prozessanschlusses weitestgehend elektrisch isolierend ist.

Ein hoher spezifischer elektrischer Widerstand wird in einer Ausgestaltung durch die Beimischung von Glasfasern oder Glas zu der Vergussmasse realisiert.

In einer weiteren Ausgestaltung ist vorgesehen, dass das Sensorgehäuse in einem Außenbereich eine hohe elektrische Leitfähigkeit aufweist. Das kann insbesondere dadurch realisiert sein, dass der Vergussmasse Kohlefasern beigemischt sind. Unter einem Außenbereich ist ein Volumenbereich zu verstehen, der zumindest teilweise durch die Außenfläche des Sensors begrenzt ist. Der Außenbereich kann hierbei durch die gesamte Außenfläche des Sensors begrenzt sein. Ebenfalls vorgesehen ist, dass der Außenbereich nur durch einen Teil der Außenfläche des Sensorgehäuses begrenzt ist. Insbesondere kann ein Sensorgehäuse mehrere Außenbereiche aufweisen. Ein derartiger Sensor, der einen Außenbereich mit einer hohen elektrischen Leitfähigkeit aufweist, eignet sich besonders für den Einsatz in einem explosionsgefährdeten Bereich. Durch die Ausgestaltung wird ein Bereich gleichen elektrischen Potentials und auch eine elektromagnetische Abschirmung realisiert und so kann verhindert werden, dass es zu einer Aufladung des Sensorgehäuses kommt, wodurch ein Funke entstehen kann.

Eine bevorzugte Ausgestaltung des erfindungsgemäßen Sensors ist dadurch ausgezeichnet, dass das Sensorgehäuse zumindest teilweise beschichtet ist. Findet der Sensor im Bereich der Lebensmittelindustrie Anwendung und kommt mit Lebensmitteln in Berührung, so ist in einer Ausgestaltung vorgesehen, dass das Sensorgehäuse in dem Bereich, mit dem es bei bestimmungsgemäßem Gebrauch mit den Lebensmitteln in Berührung kommt, eine lebensmitteltaugliche Beschichtung aufweist. Da die meisten Vergüsse nicht lebensmitteltauglich sind, kann der gegossene Sensor durch die Beschichtung gleichwohl im Bereich der Lebensmittelindustrie zur Anwendung kommen, ohne dass gesundheitliche Risiken durch Verunreinigungen durch den Sensor zu befürchten sind. In einer weiteren Ausgestaltung ist das Beschichtungsmaterial feuchtigkeitsabweisend oder nahezu feuchtigkeitsundurchlässig gewählt. Das hat den Vorteil, dass die langfristigen negativen Auswirkungen einer Umgebungsfeuchte auf die Sensorelektronik vermieden bzw. minimiert werden können.

Viele Sensoren weisen neben dem Sensorelement weitere Bauteile zur Detektion sekundärer Messgrößen auf. In einer Ausgestaltung weist der Sensor einen Temperatursensor bzw. ein Temperatursensorelement zur Bestimmung einer Mediumtemperatur auf. Für die Erfindung ist es nicht relevant, wie der Temperatursensor an sich ausgebildet ist. Erfindungsgemäß ist vorgesehen, dass das Sensorgehäuse im Bereich des Temperatursensors eine hohe spezifische Wärmeleitfähigkeit aufweist. Durch diese Ausgestaltung wird ein guter Wärmetransport von dem Medium hin zu dem Temperatursensor gewährleistet. Der Temperatursensor kann auch das primäre Sensorelement darstellen. Um die spezifische Wärmeleitfähigkeit der Vergussmasse zu erhöhen, bietet sich beispielsweise das Beimischen von Kohle-Nanotubes und/oder von Metallpulver an. Insbesondere bietet es sich an, Aluminiumhydroxid beizumischen.

Wird der Sensor zur Vermessung eines Mediums mit einer hohen Temperatur eingesetzt, so sieht eine bevorzugte Ausgestaltung des erfindungsgemäßen Sensors einen Bereich zwischen Sensorelement und Sensorelektronik vor, der eine niedrige spezifische Wärmeleitfähigkeit aufweist. So kann gewährleistet werden, dass die Sensorelektronik ausreichend kühl gehalten wird, um die Funktion der Sensorelektronik durch Übertragung der Wärme des Mediums nicht zu gefährden. Im Bereich der Sensorelektronik selbst kann wiederum ein Verguss mit einer hohen spezifischen Wärmeleitfähigkeit verwendet werden, um ein gutes Ableiten der durch die Bauteile generierten Wärme zu gewährleisten.

In einer Ausgestaltung ist der erfindungsgemäße Sensor als induktiver Leitfähigkeitssensor ausgestaltet. Ein Leitfähigkeitssensor umfasst insbesondere mindestens zwei Spulen, nämlich eine Sendespule und eine Empfangsspule. Bei dem erfindungsgemäßen Sensor sind die beiden Spulen durch das Sensorgehäuse vergossen. Eine vorteilhafte Ausgestaltung ist dadurch gekennzeichnet, dass das Sensorgehäuse im Bereich der Spulen eine niedrige Dielektrizitätskonstante aufweist. Je niedriger der Wert der Dielektrizitätskonstanten des Vergusses im Bereich der Spulen, desto weniger reagiert die Vergussmasse auf ein bestehendes Feld.

In einer weiteren Ausgestaltung sind die beiden Spulen nebeneinander angeordnet. Dann ist zwischen den Spulen ein magnetisch schirmendes Material angeordnet, um zu gewährleisten, dass die Feldlinien durch das zu vermessende Medium verlaufen. Dieses magnetisch schirmende Material kann beispielsweise durch einen entsprechenden Verguss zwischen den Spulen realisiert sein, das magnetisch schirmende Material kann aber auch durch ein Bauteil, beispielsweise ein Abschirmblech, realisiert sein.

Der Erfindung liegt ebenfalls die Aufgabe zugrunde, ein Verfahren zur Herstellung eines erfindungsgemäßen Sensors bereitzustellen.

Das erfindungsgemäße Verfahren ist dadurch gekennzeichnet, dass in einem Bereitstellungsschritt eine Gussform bereitgestellt wird, dass in einem Bauteilschritt die Bauteile des Sensors in die Gussform eingebracht werden, dass in einem Vergussschritt Vergussmasse mit sich voneinander unterscheidenden physikalischen Eigenschaften in die Gussform eingebracht wird und dass in einem Entnahmeschritt der Sensor aus der Gussform entnommen wird. Wenn es heißt, dass in einem Bereitstellungsschritt eine Gussform bereitgestellt wird, dann ist damit gemeint, dass die Gussform so vorbereitet wird, dass der Verguss eingefüllt werden kann. Eine Gussform besteht in der Regel aus mehreren Teilen, das Bereitstellen bedeutet also beispielsweise die Montage der Einzelteile zu der Gussform.

In dem Bauteilschritt werden die Bauteile des Sensors in die Gussform eingebracht. Es ist jedoch nicht zwangsläufig vorgesehen, dass alle Bauteile auf einmal in die Gussform eingebracht werden. Vielmehr kann auch ein Teil der Bauteile in die Gussform eingebracht werden.

Es gibt erfindungsgemäß verschiedene Arten, die Bauteile in die Gussform einzubringen. Hierzu wird sich verschiedener Hilfsmittel bedient, nämlich sogenannter Inlays. Unterschieden wird zwischen zwei Arten von Inlays, nämlich zum einen solcher Inlays, die mehrmals verwendet werden können, man spricht von sogenannten nicht verlorenen Inlays, und solchen Inlays, die zusammen mit dem Bauteil vergossen werden und im Sensorgehäuse verbleiben, man spricht von sogenannten verlorenen Inlays. Nicht verlorene Inlays dienen zur Ausformung von Hohlräumen oder Bohrungen in dem Sensorgehäuse. Ist der Sensor beispielsweise als induktiver Sensor ausgestaltet, so wird der Hohlraum im Spuleninneren durch ein solches entnehmbares Inlay realisiert, das nach der Entnahme des Sensors aus der Gussform entnommen wird und wieder verwendet werden kann. Verlorene Inlays werden beispielsweise verwendet, um mit Sensorelektronik bestückte Träger im Inneren der Gussform zu arretieren. Ein solches Inlay verbleibt in dem Verguss.

Die Bauteile können auch lokal in der Gussform positioniert werden und dann mit Vergussmasse fixiert werden. Als Fixiermasse kann hierbei Vergussmasse verwendet werden, die lokal eingebracht wird. Um die Fließfähigkeit der für die Fixierung verwendeten Vergussmasse zu verringern, können sogenannte Thixotropie-Mittel zur Verwendung kommen.

In dem Vergussschritt wird die Vergussmasse in die Gussform eingebracht. Das Einbringen der Vergussmasse in die Gussform kann in unterschiedlicher Weise realisiert werden.

In einer bevorzugten Ausführungsform des erfindungsgemäßen Verfahrens wird der Vergussschritt derart durchgeführt, dass eine Ausgangs-Vergussmasse in die Gussform eingeführt wird, wobei der Ausgangs-Vergussmasse während des Vergießens ein Zusatzstoff beigemischt wird. Der Zusatzstoff dient zur Beeinflussung der physikalischen Eigenschaften der Ausgangs-Vergussmasse. Die Konzentration des beigemischten Zusatzstoffes kann hierbei über die Zeit des Vergießens variiert werden. Beispielsweise wird in einem ersten Zeitraum kein Zusatzstoff beigemischt und in einem zweiten, auf den ersten Zeitraum folgenden zweiten Zeitraum so eine Menge des Zusatzstoffs beigemischt, dass sich eine konstante Konzentration des Zusatzstoffs im Verguss einstellt. Das resultierende Sensorgehäuse weist dann zwei Bereiche an Vergussmasse auf, die voneinander verschiedene physikalische Eigenschaften aufweisen. In einer weiteren Ausführungsform wird die Konzentration des beigemischten Zusatzstoffes über die Zeit erhöht oder verringert. Das resultierende Sensorgehäuse weist dann einen kontinuierlichen Gradienten an Zusatzstoff auf.

Eine weitere Ausführungsform zeichnet sich dadurch aus, dass zunächst eine erste Vergussmasse in die Gussform eingebracht wird und dann eine zweite Vergussmasse in die Gussform eingebracht wird. Das resultierende Sensorgehäuse weist dann einen ersten Bereich und einen zweiten Bereich auf. Die zweite Vergussmasse wird bevorzugt dann in die Gussform eingebracht, wenn die erste Vergussmasse ausgehärtet ist, oder zumindest derart angetrocknet ist, dass es nicht mehr zu einem Vermischen der beiden Vergussmassen kommt, wenn die zweite Vergussmasse mit der ersten Vergussmasse in Berührung kommt. Ein Maß für die Zeit, die abzuwarten ist, bevor die zweite Vergussmasse in die Gussform eingebracht wird, ist die sogenannte Topfzeit, hier der ersten Vergussmasse. Die Topfzeit gibt die Verarbeitbarkeitsdauer eines Materials an. Die Topfzeit der ersten Vergussmasse ist also die Zeit, nach der die Vergussmasse derart viskos ist, dass sie nicht mehr verarbeitet werden kann, was einhergeht mit dem hier genutzten Effekt, dass ein Vermischen mit der zweiten Vergussmasse nicht mehr stattfinden kann. Alternativ können Vergussmassen zum Einsatz kommen, die mittels UV-Strahlung ausgehärtet werden können oder zumindest teilweise ausgehärtet werden können.

In einer bevorzugten Ausführungsform wird eine erste Vergussmasse in die Gussform eingebracht, die Gussform verschlossen und anschließend rotiert. Die Rotation erfolgt in einer Ausführungsform gleichmäßig, also mit konstanter Rotationsgeschwindigkeit. In einer anderen Ausführungsform variiert die Rotationsgeschwindigkeit während des Rotationsvorgangs. Die Rotation kann bevorzugt um eine Rotationsachse ausgeführt werden. In einer weiteren Ausführungsform wird nicht um eine einzige Rotationsachse rotiert, vielmehr wird "chaotisch" rotiert. Die Rotation führt dazu, dass sich das Vergussmaterial auf Grund der auf das Vergussmaterial wirkenden Fliehkräfte gleichmäßig an der Gussform absetzt und so die Gussform mit einer gleichmäßigen Vergussschicht bedeckt wird. Die zweite Vergussmasse kann dann in einer Ausführungsform auf gleiche Weise in die Gussform eingebracht werden - so entsteht eine weitere gleichmäßige Vergussschicht, die sich auf der ersten Vergussschicht absetzt - oder durch einfaches Einfüllen - also "Auffüllen" der Gussform - in die Gussform eingebracht werden. So entsteht ein Sensorgehäuse, das einen Kern aus der zweiten Vergussmasse aufweist, der von einer Deckschicht der ersten Vergussmasse umgeben ist.

In einer weiteren Ausführungsform ist vorgesehen, dass die Gussform nach Einfüllen der Vergussmasse geschwenkt wird. Je nach Schwenkbewegung setzt sich die Vergussmasse in einem bestimmten Bereich der Gussform ab.

In einer Ausführungsform umfasst der Vergussschritt auch ein Tempern der vergossenen Vergussmasse. Unter Tempern versteht man ein Erhitzen eines Materials über einen längeren Zeitraum. Durch den gezielten Einsatz von Wärme wird die Aushärtung der Vergussmasse beschleunigt. Zudem kann durch den Temperprozess einer Blasenbildung der Vergussmasse vorgebeugt werden.

In einer weiteren Ausführungsform umfasst der Vergussschritt ein Vorwärmen der Vergussmasse, bevor diese in die Gussform eingebracht wird. Durch das Vorwärmen sinkt die Viskosität der Vergussmasse, so dass sich diese leichter in die Gussform einbringen lässt.

Die Reihenfolge der einzelnen Schritte ist nicht festgelegt.

In einem Entformungsschritt wird der Sensor aus der Gussform entnommen. Der Entformungsschritt wird bevorzugt dann ausgeführt, wenn die Vergussmasse ausgehärtet ist und sich nach der Entnahme nicht mehr weiter verformen lässt.

In einer bevorzugten Ausführungsform wird die Gussform in einem Vorbehandlungsschritt vorbehandelt. Das Vorbehandeln erfolgt hier durch ein Temperieren der Gussform und/oder durch ein Beschichten mit einem von dem Verguss unterschiedlichen Material, insbesondere durch ein Eintrennen der Vergussform.

Das Temperieren der Gussform hat den Vorteil, dass sich der Verguss leichter in die Form einbringen lässt, da die Viskosität der Vergussmasse in der Regel temperaturabhängig ist.

Ein vorheriges Beschichten der Gussform hat mehrere Vorteile. Zum Einen kann die Gussform mit einem sogenannten Trennmittel vorbehandelt werden, das Auftragen eines Trennmittels auf eine Gussform wird als Eintrennen bezeichnet. Ein Trennmittel ist beispielsweise ein Wachs oder ein PVA-Trennmittel und dient dazu, dass eine Entformung, also das Lösen des Sensors von der Form bei der Entnahme des Sensors sichergestellt ist. Die Beschichtung kann insbesondere mit einem Pinsel oder mit einem Tuch aufgetragen werden oder sie kann aufgesprüht oder anderweitig aufgebracht werden.

Eine weitere Beschichtung kann durch Auftragen sogenannter GelCoats erfolgen. Diese sorgen dafür, dass eine lackierfähige Oberfläche des Sensors realisiert wird, also eine derartige Oberfläche, auf der ein nachträglich aufgetragener Lack hält. GelCoats können zudem UV-beständig sein und die Sensoren demnach UV-stabil machen. Wird eine derartige Beschichtung aufgetragen, so ist in einer Ausführungsform vorgesehen, dass die mit Vergussmasse gefüllte Gussform getempert wird. Durch das Tempern wird der GelCoat erhitzt und verbäckt mit dem Verguss. Durch ein weiteres Auftragen von einer Harzschicht wird die Kopplung zwischen Verguss und GelCoat optimiert. Ein Auftragen einer Harzschicht hat wieder den Vorteil, dass dem Harz bereits Zusatzstoffe beigemischt werden können, um gezielte physikalische Eigenschaften einer äußeren Beschichtung zu realisieren.

In einer besonders bevorzugten Ausführungsform wird in einem weiteren Vergussschritt eine weitere Vergussmasse in die Gussform eingebracht.

In einer weiteren Ausführungsform des erfindungsgemäßen Verfahrens werden in einem zweiten Bauteilschritt weitere Bauteile in die Gussform eingebracht.

In einer Ausführungsform wird zunächst das Bauteil eingebracht und anschließend die Vergussmasse in die Gussform eingebracht. In einer anderen Ausführungsform wird zunächst Vergussmasse in die Gussform gebracht und anschließend das Bauteil in die Gussform eingebracht. Das Bauteil wird dann in die Vergussmasse eingebettet. Der Schritt kann nur dann erfolgen, wenn die Vergussmasse noch hinreichend fließfähig ist.

Ein Vergussschritt kann auch unabhängig von einem Bauteilschritt durchgeführt werden.

Eine besonders bevorzugte Ausführungsform des erfindungsgemäßen Verfahrens ist dadurch gekennzeichnet, dass in einem Bauteilvorbehandlungsschritt das oder die Bauteile vorbehandelt werden. In einer Ausführungsform wird ein Bauteil im Vorbehandlungsschritt in eine zweite Gussform eingebracht, die von ihrem Volumen kleiner ist als die erste Gussform, also die Gussform des Sensors. Die zweite Gussform wird dann mit einer Vergussmasse gefüllt. Nachdem die Vergussmasse ausgehärtet ist, wird das Bauteil aus der Gussform entfernt und in die erste Gussform eingebracht, wo es anschließend mit einem weiteren Verguss vergossen wird.

In einer anderen Ausführungsform wird das Bauteil in eine Vergussmasse eingetaucht, um es mit Verguss zu umhüllen. In einer weiteren Ausführungsform wird das Bauteil mit einer Beschichtung versehen.

Eine weitere Ausführungsform des erfindungsgemäßen Verfahrens ist dadurch gekennzeichnet, dass in einem Nachbearbeitungsschritt der gegossene Sensor nachbearbeitet wird. Das Nachbearbeiten wird durch ein nachträgliches Beschichten realisiert und/oder wird durch ein Formgeben realisiert. Ein Formgeben kann insbesondere durch Schleifen des Vergusses oder sonstige maschinelle Nachbearbeitung, beispielsweise mit einer CNC-Maschine, ausgeführt werden.

Im Einzelnen gibt es eine Vielzahl von Möglichkeiten, den erfindungsgemäßen Sensor und das erfindungsgemäße Verfahren zum Herstellen des Sensors auszugestalten und weiterzubilden. Dazu wird verwiesen einerseits auf die den Patentansprüchen 1 und 9 nachgeordneten Patentansprüche, andererseits auf die Beschreibung von Ausführungsbeispielen in Verbindung mit der Zeichnung. In der Zeichnung zeigen

Fig. 1      eine Explosionsdarstellung einer Gussform und eines gegossenen Sensors,

Fig. 2      einen vollständigen gegossenen Sensor,

Fig. 3      einen Querschnitt durch einen gegossenen Sensor,

Fig. 4      einen Querschnitt durch einen zweiten gegossenen Sensor,

Fig. 5      ein Blockdiagramm einer ersten Ausführungsform eines Verfahrens zum Herstellen eines Sensors,

Fig. 6a      ein Blockdiagramm einer ersten Ausführungsform eines Vergussschrittes,

Fig. 6b     ein Blockdiagramm einer zweiten Ausführungsform eines Vergussschrittes und

Fig. 7      ein Blockdiagramm einer zweiten Ausführungsform eines Verfahrens zum Herstellen eines Sensors.

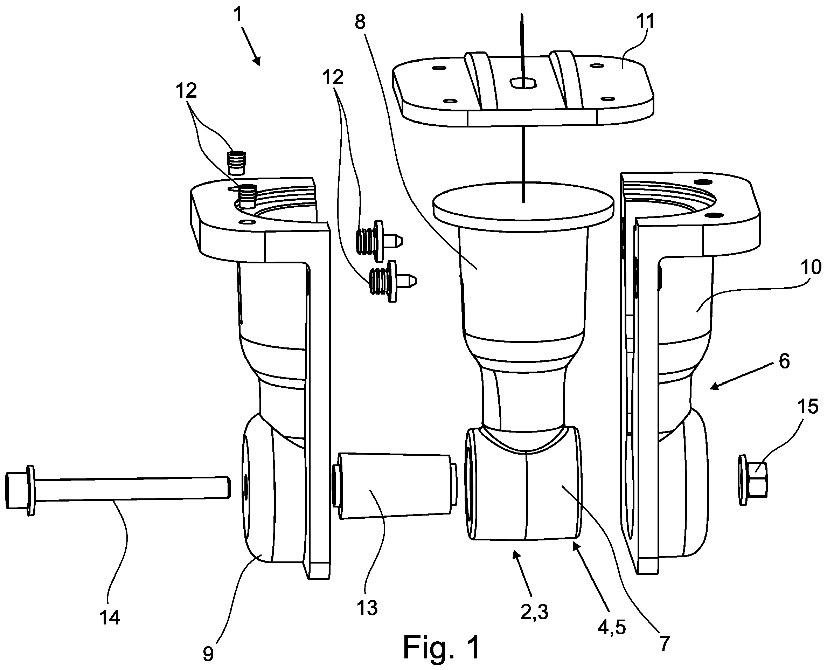

Fig. 1 zeigt einen Teil eines gegossenen Sensors 1. Der dargestellte Sensor 1 ist als Leitfähigkeitssensor ausgebildet. Die Erfindung beschränkt sich jedoch nicht auf Leitfähigkeitssensoren, sondern umfasst vielmehr sämtliche Sensoren der Prozessmesstechnik, die zur Erfassung einer Messgröße dienen und geeignet sind. Der dargestellte Sensor 1 weist als Sensorelement 2 zwei Spulen 3 auf. Die Spulen 3 sind in der Darstellung nicht direkt sichtbar, da sie von einem Verguss 4 umgeben sind. Der Verguss 4 bildet das gesamte Sensorgehäuse 5. Zur Herstellung des Sensors 1 wird eine Gussform 6 bereitgestellt, die dann mit Vergussmassen mit verschiedenen physikalischen Eigenschaften gefüllt wird. Durch die Verwendung verschiedener Vergussmassen weist der Sensor 1 Bereiche 7, 8 auf, die verschiedene physikalische Eigenschaften aufweisen. So ist es möglich, auf eine einfache Art und Weise einen Sensor 1 herzustellen, der optimal für den Anwendungsbereich ausgelegt ist und mit dem verschiedene Anforderungen an verschiedene Bereiche 7, 8 des Sensors 1 bzw. Sensorgehäuses 5 erfüllt werden können.

Die dargestellte Gussform 6 weist ein erstes Formteil 9 und ein zweites Formteil 10 auf. Durch die zweiteilige Ausgestaltung der Gussform 6 wird ein Entnehmen des fertig gegossenen Sensors 1 erleichtert, da die Gussform 6 einfach aufgetrennt werden kann. Die Gussform 6 weist ebenfalls einen Deckel 11 auf, der an den Formteilen 9 und 10 befestigt wird, wenn die Vergussmasse in die Gussform 6 eingebracht ist. Die Befestigung geschieht hier mittels Schrauben 12. Auch die beiden Formteile 9 und 10 werden mit Schrauben 12 miteinander verbunden.

Funktionsbedingt muss das zu vermessende Medium durch die Spulen 3 des Sensors 1 strömen. Dazu muss gewährleistet sein, dass im Spuleninnenraum ein Strömungskanal für das Medium gebildet ist. Der Spuleninnenraum darf also nicht vollständig mit Vergussmasse gefüllt sein. Um zu verhindern, dass die Vergussmasse den Spuleninnenraum ausfüllt, wird ein Inlay 13 verwendet, das mit Hilfe eines stabförmigen Halterungselements 14 und einer Schraubenmutter 15 in die Gussform 6 eingebracht wird und an ihr befestigt wird. Das Inlay 13 befindet sich im Spuleninnenraum. Wird nun die Vergussmasse in die Gussform 6 eingebracht, ergießt sie sich um das Inlay 13. Nachdem die Vergussmasse ausgehärtet ist, können Gussform 6 und Inlay 13 entfernt werden. Übrig bleibt der Strömungskanal für das Medium. Nicht dargestellt, aber ebenfalls verwendet, werden sogenannte verlorene Inlays. Diese dienen ebenfalls zur Arretierung von Bauteilen in der Gussform 6. Verlorene Inlays werden jedoch mit vergossen und nach Aushärten nicht aus dem Verguss entnommen.

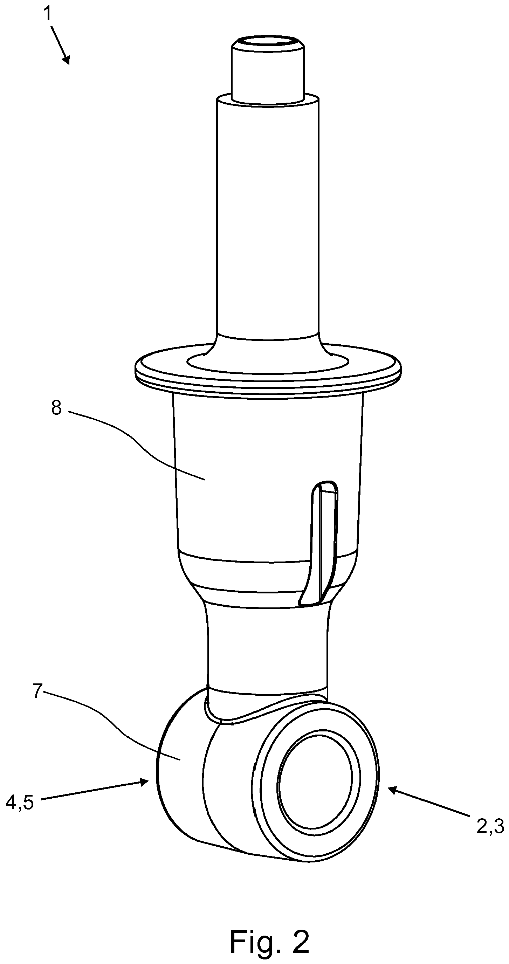

In Fig. 2 dargestellt ist ein gegossener Sensor 1 in seiner Gesamtheit. Gut sichtbar ist ein erster Bereich 7, der sich in seinen physikalischen Eigenschaften von dem zweiten Bereich 8 unterscheidet. An der Grenzschicht zwischen den beiden Bereichen kommt es nicht zu einem Vermengen der zwei unterschiedlichen Vergussmassen, da die zweite Vergussmasse erst dann in die Gussform 6 eingebracht wird, wenn die erste Vergussmasse ausgehärtet ist, zumindest so weit ausgehärtet ist, dass das Vermengen nicht mehr stattfinden kann. Der dargestellte Sensor 1 ist ebenfalls als Leitfähigkeitssensor ausgebildet.

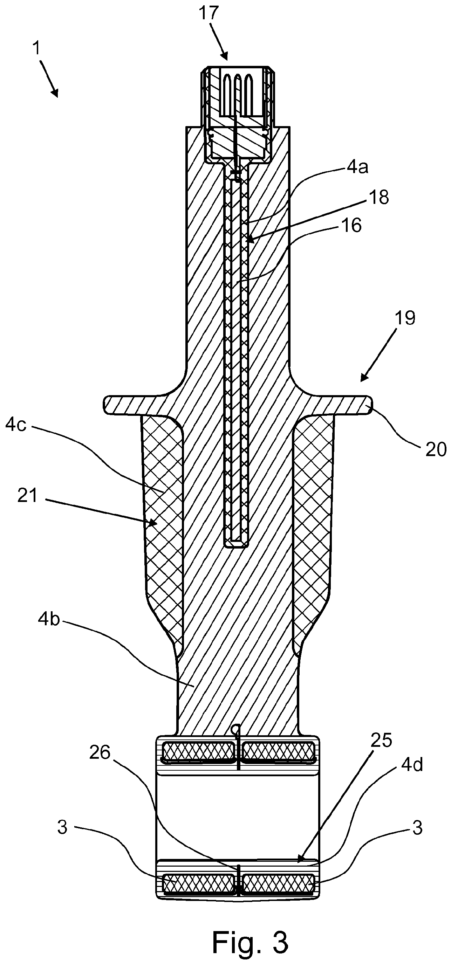

Fig. 3 zeigt einen Querschnitt durch einen gegossenen Sensor 1, der im Wesentlichen dem Sensor 1 in Fig. 2 entspricht. Die Sensorelektronik ist auf einem Träger 16 angeordnet. Im dargestellten Beispiel ist auf die Darstellung der einzelnen Bauteile auf dem Träger 16 auf Grund der Übersichtlichkeit verzichtet worden. Die Sensorelektronik kann über einen mit dem Träger 16 verbundenen Anschluss 17 von außen kontaktiert werden. Um den Träger 16 befindet sich ein Bereich 18 mit einem Verguss 4a, dessen thermischer Ausdehnungskoeffizient im Wesentlichen dem thermischen Ausdehnungskoeffizienten des Trägermaterials entspricht. Diese Ausgestaltung hat den Vorteil, dass sich bei einer Temperaturänderung der Träger 16 und der Verguss 4a gleichermaßen ausdehnen oder zusammenziehen. Da der Verguss 4a auch die Bauteile auf dem Träger 16 einschließt, kann so verhindert werden, dass es zu einer Abscherung der Bauteile auf Grund verschiedener thermischer Ausdehnung der Materialien kommen kann.

Der Sensor 1 weist zudem einen Prozessanschluss 19 auf. Hiermit wird der Sensor 1 an einen Prozessraum, beispielsweise an eine Behälterwandung, angeschlossen. Im Bereich 20 des Prozessanschlusses 19 ist ein Verguss 4b mit einem hohen spezifischen elektrischen Widerstand verwendet.

Der Sensor 1 weist einen Außenbereich 21 auf, in dem der Verguss 4c eine hohe elektrische Leitfähigkeit aufweist. Hierdurch kann verhindert werden, dass sich das Gehäuse in ungünstiger Weise elektrisch auflädt, was zu einer Funkenbildung führen könnte. Somit kann der Sensor auch in explosionsgefährdeten Bereichen eingesetzt werden. Im Bereich 25 der Spulen 3 weist der Verguss 4d eine niedrige Dielektrizitätskonstante auf. Die beiden Spulen 3 sind durch ein Schirmelement 26 magnetisch voneinander abgeschirmt.

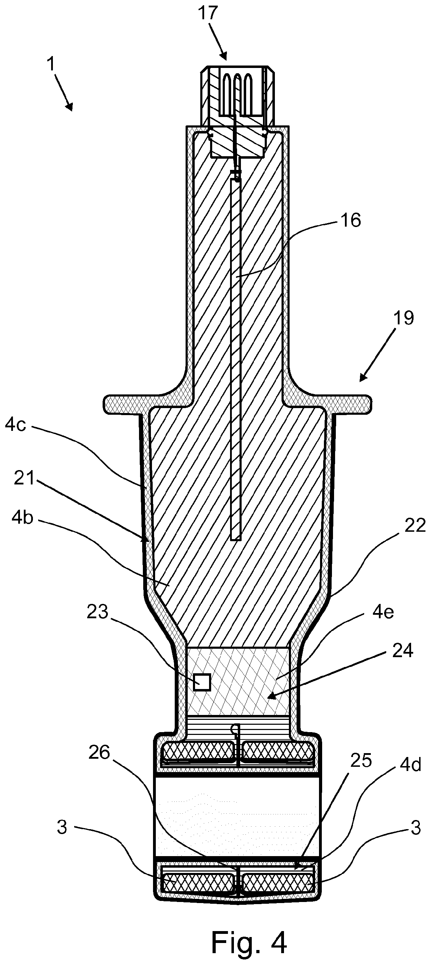

Fig. 4 zeigt eine weitere Ausgestaltung eines gegossenen Sensors 1. Der Sensor 1 ist ebenfalls als Leitfähigkeitssensor ausgestaltet und weist dementsprechend zwei Spulen 3 auf. Der dargestellte Sensor 1 unterscheidet sich von dem in Fig. 3 dargestellten Sensor dadurch, dass er im Bereich unterhalb des Prozessanschlusses 19 mit einer Beschichtung 22 beschichtet ist. Die Beschichtung 22 ist aus einem lebensmitteltauglichen Material realisiert, sodass der dargestellte Sensor 1 Anwendung im Bereich der Lebensmittelindustrie finden kann und geeignet ist, mit Lebensmitteln in Berührung zu kommen. Zudem weist der Sensor 1 einen Temperatursensor 23 auf. Der Temperatursensor 23 dient zum Bestimmen einer Mediumtemperatur. Um eine gute Wärmeübertragung zwischen Medium und Temperatursensor 23 zu gewährleisten, weist der Verguss 4e im Bereich 24 um den Temperatursensor 23 eine hohe Wärmeleitfähigkeit auf.

Der Verguss 4b um den Träger 16 in Fig. 4 weist einen hohen spezifischen elektrischen Widerstand auf. Der spezifische elektrische Widerstand ist derart gewählt, dass die durch den Verguss 4b immer realisierten leitfähigen Pfade zwischen verschiedenen potentialtragenden Oberflächen der umhüllten Schaltung einen elektrischen Widerstand aufweisen, der mehrere Zehnerpotenzen über dem jeweiligen Schaltungswiderstand liegt. Zudem weist der Sensor 1 in seinem gesamten Außenbereich 21 einen Verguss 4b mit einer hohen elektrischen Leitfähigkeit auf, um ein Aufladen des gesamten Sensors 1 zu vermeiden.

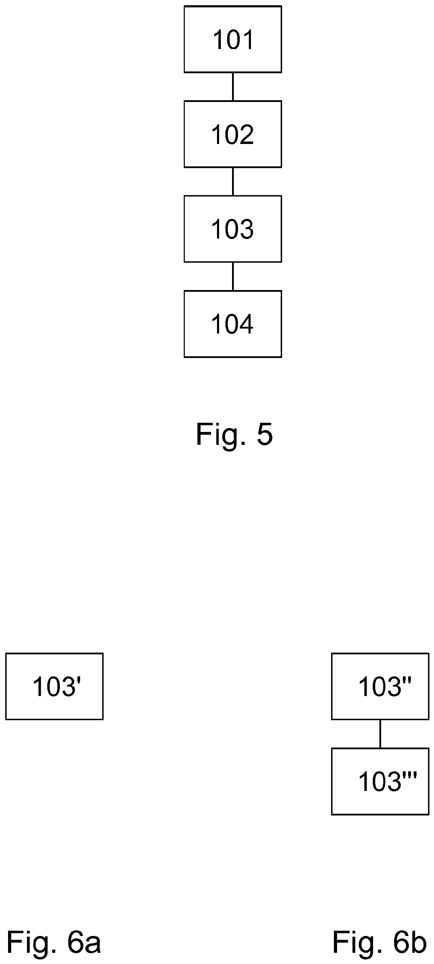

Fig. 5 zeigt ein ein Verfahren zur Herstellung eines gegossenen Sensors darstellendes Blockdiagramm. In einem Bereitstellungsschritt 101 wird eine Gussform bereitgestellt. In einem Bauteilschritt 102 werden die elektrischen und elektronischen Bauteile, insbesondere das Sensorelement, in die Gussform eingebracht. In einem Vergussschritt 103 wird Vergussmasse mit sich voneinander unterscheidenden physikalischen Eigenschaften in die Gussform eingebracht. In einem Entformungsschritt 104 wird dann der gegossene Sensor aus der Gussform entnommen.

Fig. 6 zeigt zwei Möglichkeiten, den Verfahrensschritt 103 auszuführen. In einer ersten Variante, die in Fig. 6a gezeigt ist, wird in einem Schritt 103' eine Vergussmasse in die Gussform eingebracht, wobei während des Vergießens ein Zusatzstoff beigemischt wird.

In der in Fig. 6b gezeigten Variante wird in einem ersten Schritt 103" eine erste Vergussmasse in die Gussform eingebracht und in einem zweiten Schritt 103''' wird eine zweite Vergussmasse in die Gussform eingebracht. Die zweite Vergussmasse unterscheidet sich in ihren physikalischen Eigenschaften von der ersten Vergussmasse und wird dann in die Gussform eingebracht, wenn die erste Vergussmasse so weit gehärtet ist, dass es nicht zu einem Vermischen der beiden Vergussmassen kommt.

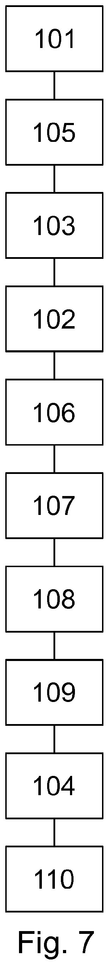

In Fig. 7 ist eine Ausführungsform eines Verfahrens zur Herstellung eines gegossenen Sensors als Blockdiagramm dargestellt.

In einem Bereitstellungsschritt 101 wird eine Gussform bereitgestellt. In diesem Schritt werden insbesondere mehrere Gussformteile zusammenmontiert und Inlays in die Form eingebracht. In einem darauf folgenden Vorbehandlungsschritt 105 wird die Gussform temperiert. Durch das Temperieren wird bewirkt, dass sich die Vergussmasse besser in der Form verteilt, da die Viskosität der Vergussmasse temperaturabhängig ist. In einem darauffolgenden Vergussschritt 103 wird eine erste Vergussmasse in die Gussform eingebracht. Anschließend wird die Gussform mit einer gleichbleibenden Rotationsgeschwindigkeit rotiert, um so ein gleichmäßiges Absetzen der Vergussmasse an der Gussform zu realisieren. Die Rotation erfolgt so lange, bis die Vergussmasse derart angehärtet ist, dass sie bei Beenden der Rotation ihre Form nicht mehr verliert und nicht verläuft. Der Vergussschritt 103 beinhaltet ebenfalls ein Tempern der ersten Vergussmasse. Hierdurch wird die Vergussmasse vollständig ausgehärtet. In einem Bauteilschritt 102 wird das Sensorelement in die Gussform eingebracht und in einem weiteren Vergussschritt 106 eine zweite Vergussmasse, die sich in ihren physikalischen Eigenschaften von der ersten Vergussmasse unterscheidet, in die Gussform eingebracht. Der Vergussschritt 106 erfolgt derart, dass die Gussform bis zu einer Höhe mit Vergussmasse gefüllt wird, derart, dass die Sensorelektronik vollständig mit Verguss bedeckt ist. Während die Vergussmasse aushärtet, wir din einem Bauteilvorbehandlungsschritt 107 die Sensorelektronik, die auf einem Träger angeordnet ist, vorbehandelt, indem sie separat vergossen ist. Der vergossene Träger wird dann in einem zweiten Bauteilschritt 108 in die Gussform eingebracht, woraufhin in einem dritten Vergussschritt 109 eine dritte Vergussmasse in die Gussform eingebracht wird. Die dritte Vergussmasse unterscheidet sich in ihren physikalischen Eigenschaften ebenfalls von der ersten und der zweiten Vergussmasse. Der dritte Vergussschritt erfolgt dann, wenn die Vergussmasse, die im Vergussschritt 106 in die Gussform eingebracht worden ist, ausgehärtet ist. So wird ein Vermengen der Vergussmassen verhindert. Nach dem Aushärten der dritten Vergussmasse wird in einem Entformungsschritt 104 der Sensor aus der Gussform entfernt und in einem Nachbehandlungsschritt 110 beschichtet.

**Bezugszeichen**

1  Sensor
2  Sensorelement
3  Spule
4  Verguss
5  Sensorgehäuse
6  Gussform
7  erster Bereich mit Verguss
8  zweiter Bereich mit Verguss
9  erster Teil der Gussform
10  zweiter Teil der Gussform
11  Deckel der Gussform
12  Schrauben
13  Inlay
14  Halterungselement für das Inlay
15  Schraubmutter
16  Träger
17  Anschluss des Trägers
18  Bereich um den Träger

19  Prozessanschluss
20  Verguss im Bereich des Prozessanschlusses
21  Außenbereich
22  Beschichtung
23  Temperatursensor
24  Bereich um den Temperatursensor
25  Bereich um die Spulen
26  Isolierelement zwischen den Spulen

101  Bereitstellungsschritt
102  Bauteilschritt
103  Vergussschritt
104  Entformungsschritt
105  Vorbehandlungsschritt
106  zweiter Vergussschritt
107  Bauteilvorbehandlungsschritt
108  zweiter Bauteilschritt
109  dritter Vergussschritt
110  Nachbearbeitungsschritt

**Patentansprüche**

1. Sensor (1) der Prozessmesstechnik zur Erfassung einer Messgröße, mit mindestens einem als Sensorelement (2) dienenden elektrischen oder elektronischen Bauteil, wobei das Sensorelement (2) zumindest teilweise von einem Verguss (4) umgeben ist, wobei der Verguss (4) das Sensorgehäuse (5) bildet und durch Vergießen von Vergussmasse in eine Gussform (6) hergestellt ist, wobei die Außenabmessungen des Sensorgehäuses (5) den Innenabmessungen der Gussform (6) entsprechen, **dadurch gekennzeichnet, dass** das Sensorgehäuse (5) Bereiche (7, 8) mit sich voneinander unterscheidenden physikalischen Eigenschaften aufweist, wobei die sich voneinander unterscheidenden physikalischen Eigenschaften durch verschiedene Vergussmassen bewirkt sind.

2. Sensor (1) nach Anspruch 1, **dadurch gekennzeichnet, dass** verschiedene Vergussmassen zumindest teilweise durch Beimischen verschiedener Zusatzstoffe zu einer Ausgangs-Vergussmasse realisiert sind.

3. Sensor (1) nach Anspruch 1 oder 2, wobei der Sensor (1) einen mit Sensorelektronik bestückten Träger (16) aufweist, **dadurch gekennzeichnet, dass** der Verguss (4) im Bereich (18) des Trägers (16) einen thermischen Ausdehnungskoeffizienten aufweist, der dem thermischen Ausdehnungskoeffizienten des Trägermaterials entspricht, oder dass der Verguss (4) im Bereich (18) des Trägers (16) einen derartigen thermischen Ausdehnungskoeffizienten und ein Elastizitätsmodul aufweist, dass es bei einer Temperaturänderung im Bereich des Trägers (16) nicht zu einer Abscherung der Sensorelektronik von dem Träger (16) kommt.

4. Sensor (1) nach einem der Ansprüche 1 bis 3, wobei der Sensor (1) einen mit Sensorelektronik bestückten Träger (16) und/oder einen Prozessanschluss (19) aufweist, **dadurch gekennzeichnet, dass** der Verguss (4) im Bereich (18) des Trägers (16) und/oder der Verguss (4) im Bereich (20) des Prozessanschlusses (19) einen hohen spezifischen elektrischen Widerstand aufweist, insbesondere durch Beimischung von Glasfasern oder Glas.

5. Sensor (1) nach einem der Ansprüche 1 bis 4, **dadurch gekennzeichnet, dass** das Sensorgehäuse (5) in einem Außenbereich (21) eine hohe elektrische Leitfähigkeit aufweist, insbesondere durch Beimischung von Kohlefasern.

6. Sensor (1) nach einem der Ansprüche 1 bis 5, **dadurch gekennzeichnet, dass** das Sensorgehäuse (5) zumindest teilweise eine Beschichtung (22) aufweist, insbesondere in dem Bereich, mit dem es bei bestimmungsgemäßem Gebrauch mit einem Medium in Berührung kommt, eine lebensmitteltaugliche Beschichtung aufweist.

7. Sensor (1) nach einem der Ansprüche 1 bis 6, wobei der Sensor (1) einen Temperatursensor (23) zur Bestimmung einer Mediumtemperatur aufweist, **dadurch gekennzeichnet, dass** das Sensorgehäuse (5) im Bereich (24) des Temperaturfühlers (23) eine hohe spezifische Wärmeleitfähigkeit aufweist, wobei die hohe spezifische Wärmeleitfähigkeit insbesondere durch Beimischen von Kohle-Nanotubes und/oder Metallpulver, insbesondere Aluminiumhydroxid, realisiert ist.

8. Sensor (1) nach einem der Ansprüche 1 bis 7, wobei der Sensor einen mit Sensorelektronik bestückten Träger (16) aufweist, **dadurch gekennzeichnet, dass** das Sensorgehäuse (5) in einem Bereich zwischen dem Sensorelement (2) und dem mit Sensorelektronik bestückten Träger (16) eine niedrige spezifische Wärmeleitfähigkeit aufweist und/oder dass der Verguss (4) im Bereich des Trägers (16) eine hohe spezifische Wärmeleitfähigkeit aufweist.

9. Sensor (1) nach einem der Ansprüche 1 bis 8, wobei der Sensor (1) als induktiver Leitfähigkeitssensor ausgebildet ist und zwei Spulen (3) aufweist, **dadurch gekennzeichnet, dass** das Sensorgehäuse (5) im Bereich der Spulen (3) eine niedrige Dielektrizitätskonstante aufweist.

10. Verfahren zur Herstellung eines Sensors (1) der Prozessmesstechnik zur Bestimmung einer Messgröße, **dadurch gekennzeichnet,**

**dass** in einem Bereitstellungsschritt (101) eine Gussform bereitgestellt wird,
**dass** in einem Bauteilschritt (102) die Bauteile des Sensors in die Gussform eingebracht werden,
**dass** in einem Vergussschritt (103) Vergussmasse mit sich voneinander unterscheidenden physikalischen Eigenschaften in die Gussform eingebracht wird und
**dass** in einem Entformungsschritt (104) der Sensor aus der Gussform entnommen wird.

11. Verfahren nach Anspruch 9, **dadurch gekennzeichnet, dass** der Vergussschritt (103) derart ausgeführt wird, dass eine Ausgangs-Vergussmasse in die Gussform eingegossen wird, wobei der Ausgangs-Vergussmasse während des Vergießens ein Zusatzstoff beigemischt wird (103'), oder dass der Vergussschritt (103) derart ausgeführt wird, dass zunächst eine erste Vergussmasse in die Gussform eingebracht wird (103") und dann eine zweite Vergussmasse mit sich von der ersten Vergussmasse unterscheidenden physikalischen Eigenschaften in die Gussform eingebracht wird (103"').

12. Verfahren nach einem der Ansprüche 9 bis 10, **dadurch gekennzeichnet, dass** in einem Vorbehandlungsschritt (105) die Gussform vorbehandelt wird, wobei das Vorbehandeln durch Temperieren und/oder durch Beschichten mit einem von dem Verguss unterschiedlichen Material realisiert wird.

13. Verfahren nach einem der Ansprüche 9 bis 11, **dadurch gekennzeichnet, dass** in mindestens einem weiteren Vergussschritt (106) eine weitere Vergussmasse in die Gussform eingebracht wird.

14. Verfahren nach einem der Ansprüche 9 bis 12, **dadurch gekennzeichnet, dass** in mindestens einem weiteren Bauteilschritt (108) weitere Bauteile in die Gussform eingebracht werden.

15. Verfahren nach einem der Ansprüche 9 bis 13, **dadurch gekennzeichnet, dass** in einem Bauteilvorbehandlungsschritt (107) die Bauteile vorbehandelt werden, insbesondere vorvergossen werden, wobei dazu insbesondere eine zusätzliche, vom Volumen kleiner als die erste Gussform ausfallende Gussform bereitgestellt wird, dass wenigstens ein Bauteil in die zusätzliche Gussform eingebracht wird und mit Verguss vergossen wird, dass nach dem Aushärten des Vergusses das vergossene Bauteil aus der Form entnommen wird.

16. Verfahren nach einem der Ansprüche 9 bis 14, **dadurch gekennzeichnet, dass** in einem Nachbearbeitungsschritt (110) der gegossene Sensor nachbearbeitet wird, wobei das Nachbearbeiten durch ein Beschichten und/oder ein Formgeben, insbesondere durch Schleifen, realisiert wird.

Fig. 1

Fig. 2

Fig. 3

Fig. 4

101

102

103

104

Fig. 5

103'

103"

103'''

Fig. 6a

Fig. 6b

Fig. 7

Europäisches Patentamt
European Patent Office
Office européen des brevets

## EUROPÄISCHER RECHERCHENBERICHT

Nummer der Anmeldung

EP 18 20 8052

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2007 001279 A1 (CONTINENTAL AG [DE]) 10. Juli 2008 (2008-07-10)<br>* Zusammenfassung *<br>* Absätze [0023], [0041], [0048], [0049] *<br>----- | 1-16 | INV.<br>G01D11/24 |
| X | DE 10 2010 061750 A1 (BOSCH GMBH ROBERT [DE]) 24. Mai 2012 (2012-05-24)<br>* Zusammenfassung *<br>* Absätze [0035] - [0039] *<br>----- | 1-16 | |
| X | CA 2 387 899 A1 (CENTRAL RESEARCH LAB LTD [GB]) 3. Mai 2001 (2001-05-03)<br>* Seite 10, Zeile 4 - Seite 11, Zeile 3 *<br>----- | 1-16 | |
| X | US 2010/112267 A1 (STENZEL HOLGER [DE] ET AL) 6. Mai 2010 (2010-05-06)<br>* Zusammenfassung *<br>* Absätze [0021], [0023], [0036], [0038] *<br>----- | 1-16 | |

RECHERCHIERTE SACHGEBIETE (IPC)

G01D

Der vorliegende Recherchenbericht wurde für alle Patentansprüche erstellt

| Recherchenort | Abschlußdatum der Recherche | Prüfer |
|---|---|---|
| München | 7. Mai 2019 | Thomas, Judith |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 20 8052

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-05-2019

| Im Recherchenbericht angeführtes Patentdokument | Datum der Veröffentlichung | Mitglied(er) der Patentfamilie | Datum der Veröffentlichung |
|---|---|---|---|
| DE 102007001279 A1 | 10-07-2008 | KEINE | |
| DE 102010061750 A1 | 24-05-2012 | KEINE | |
| CA 2387899 A1 | 03-05-2001 | AU 1042401 A<br>CA 2387899 A1<br>CN 1384919 A<br>EP 1226429 A1<br>JP 2003513241 A<br>US 7077938 B1<br>WO 0131327 A1 | 08-05-2001<br>03-05-2001<br>11-12-2002<br>31-07-2002<br>08-04-2003<br>18-07-2006<br>03-05-2001 |
| US 2010112267 A1 | 06-05-2010 | CN 101722614 A<br>DE 102008043393 A1<br>EP 2181875 A2<br>JP 5096440 B2<br>JP 2010105399 A<br>US 2010112267 A1 | 09-06-2010<br>06-05-2010<br>05-05-2010<br>12-12-2012<br>13-05-2010<br>06-05-2010 |

EPO FORM P0461

Für nähere Einzelheiten zu diesem Anhang : siehe Amtsblatt des Europäischen Patentamts, Nr.12/82